# EUROPEAN PATENT SPECIFICATION

(11) **EP 2 700 662 B1**
(45) Date of publication and mention of the grant of the patent: **01.06.2016**
(21) Application number: 13189808.2
(22) Date of filing: 16.09.2009
(51) Int. Cl.: C08F 14/06, C08F 285/00, C08F 292/00

(54) **Method for the suspension polymerization of vinyl chloride in the presence of a nanofiller**
Verfahren zur Suspensionspolymerisation von Vinylchlorid in Gegenwart eines Nanofüllers
Procédé pour la polymérisation en suspension de chlorure de vinyle en présence d'une nanocharge

(30) Priority: 03.09.2009 PL 38896009
(43) Date of publication of application: 26.02.2014
(62) Divisional of application: 09756069.2
(73) Proprietor: Instytut Chemii Przemyslowej im. Prof. Ignacego Moscickiego, 01-793 Warszawa (PL)
(72) Inventor: Obloj-Muzaj, Maria, 02-777 Warszawa (PL); Abramowicz, Agnieszka, 03-291 Warszawa (PL); Rucinski, Jakub, 03-352 Warszawa (PL)
(74) Representative: Schwabe - Sandmair - Marx

(56) References cited:
- US-A- 3 899 473
- US-A- 4 272 424
- DATABASE WPI Week 200563 Thomson Scientific, London, GB; AN 2005-606917 XP002578796, & CN 1 618 865 A (UNIV HUADONG TECHNOLOGY) 25 May 2005 (2005-05-25)
- RAMOS DA SILVA ET AL: "Mesoporous Carbons Prepared by Nano-Casting with Meso- or Non-porous Silica Nanoparticles", JOURNAL OF THE BRAZILIAN CHEMICAL SOCIETY, SAO PAULO, BR, vol. 17, no. 6, 1 January 2006 (2006-01-01), pages 1170-1180, XP002676457, ISSN: 0103-5053
- REINHARD NIESSNER ET AL: "Untersuchungen der Oberfl�cheneigenschaften von ultrafeinen Aerosolen mit Hilfe eines Multistep Condensation Nuclei Counters", FRESENIUS' ZEITSCHRIFT F&#XFFFD;R ANALYTISCHE CHEMIE, vol. 333, no. 4-5, 1 January 1989 (1989-01-01), pages 437-438, XP055096893, ISSN: 0016-1152, DOI: 10.1007/BF00572346

## Description

This invention comprises a method for the suspension polymerization of vinyl chloride in the presence of a nanofiller with nanometer-size granulation.

Typical suspension polymerization of vinyl chloride produces poly(vinyl chloride) (PVC) with specific mechanical properties, largely depending on the molecular weight (expressed for commercial purposes with Fikentscher value, i.e. the so-called *K-value*). During PVC processing, additives are used to secure the required product properties. To improve mechanical properties, different modifiers are added during the processing.

At the processing stage, it is possible to improve mechanical properties of PVC by adding a nanofiller, i.e. montmorillonite or precipitated calcium carbonate, when the nanofiller-to-PVC weight ratio exceeds 5 weight % or even more than 10%, with significant improvement observed for the weight ratio of 6-10 weight %. According to literature, the application of clay, i.e. layered silicates, e.g. montmorillonite, causes difficulties with PVC thermal resistance, as ammonium salts used for clay pretreatment cause PVC degradation (Trlica J., Kaledova A., Malac Z., Simonik J., Pospisil L., ANTEC 2001 conference materials, Dallas, May 6-10 2001, communiqué No 415)

There is few reports on PVC nanocomposite preparation straight at the polymerization stage. A significant difference between these methods consists in the fact that at the processing stage it is relatively easy to add different materials to PVC (resulting in either product property improvement or deterioration), while in the polymerization process many additives cause reaction inhibiting, excessive grain agglomeration (blocking polymerization mixture) and other adverse effects, including deterioration of properties.

The first literature reports on PVC nanocomposites achieved at the polymerization stage concerned adding of a specially pretreated montmorillonite.

The Chinese patent description CN 1618865 (2005) presents PVC nanocomposite production during polymerization. Polymerization of vinyl chloride was performed at a temperature of 50°C and a pressure of 1 Mpa in the presence of modified nanofillers, namely CaCO₃ modified with stearates or SiO₂ functionalized with silanes or TiO₂ functionalized with titanates. PVC composites produced in the above manner were mixed with PVC, thermal stabilizers, modifiers and additionally nanofillers, and processed at 140-180 °C, obtaining new PVC nanocomposites. Their properties were not defined in detail.

It turned out unexpectedly that the application in the polymerization process of an addition of a nanofiller with spherical construction and narrow particle size distribution (up to 200 nm) in the form of a hybrid silicone-methacrylate "core/shell" nanofiller, significantly improves PVC mechanical properties, with the nanofiller amount substantially below that used in the processing. Thus, there is no need to use modifying additives at the processing stage to the final product, or their amounts can be significantly limited.

The application of these nanofillers in the polymerization process, with temperature ranges typical of suspension polymerization of vinyl chloride, i.e. 50-70°C, substantially increases PVC tensile strength and relative elongation at break - for plasticized products - and impact strength - for rigid products, compared with PVC with no nanofiller added. According to the invention, suspension polymerization of vinyl chloride, at temperature of 50-70°C, with the application of suspension stabilizers and free radical initiators as well as with nanometer-size fillers, consists in the fact that polymerization is performed in a mixture containing a nanofiller in the form of nanospheres with an average size of primary particles of up to 200 nm, i.e. a hybrid silicone-methacrylate "core/shell" nanofiller, wherein silicone rubber is the core and poly(methyl acrylate) or poly(methyl methacrylate) is the shell, with 0.001 - 5 % weight ratio to vinyl chloride, with nanofiller used in the form of a sol, gel, powder or in the form of aqueous dispersion of a powder, added once, in portions or continuously.

As a nanofiller, it is a good solution to use a hybrid "core/shell" silicone-acrylate filler, wherein silicone rubber is the core and poly(methyl acrylate) or poly(methyl methacrylate) is the shell, in the proportion from 20:80 to 80:20, ideally 40:60 to 60:40.

It is a good solution to use 0.01 - 3 % of the nanofiller, ideally in the 0.1 -2 % weight ratio to vinyl chloride.

It is a good solution to stabilize aqueous dispersion of a nanofiller (in powder form) with a suspension stabilizer.

It is a good solution to stabilize aqueous dispersion of a nanofiller with a suspension stabilizer from the methylcellulose derivatives or poly(vinyl alcohol)s group.

According to the invention, polymerization with a nanofiller is performed using popular suspension stabilizers, e.g. methylhydroxypropylcellulose derivatives or poly(vinyl alcohols), first- or second-order, or their mixtures, and popular free radical initiators, e.g. from peroxides, peroxyesters and peroxydicarbonates groups.

Polymerization products, obtained according to the invention, with different K-values depending on the process temperature, satisfy all PVC standards requirements and their mechanical properties are much better than those of standard PVC types.

The invention-based process and results are illustrated in examples and tables.

### Examples.

To eliminate the influence of other factors on the process, all polymerization examples illustrating the invention method and comparative examples (without a nanofiller) were conducted in the same reactor and under the same conditions, with the only changes in the polymerization temperature, dosing method and the quantity and form of the applied nanofiller.
The polymerization reactor with the capacity of 1.5 1 was filled with demineralized water (540 mL), aqueous solutions of suspension stabilizers: first-order poly(vinyl alcohol) and methylhydroxypropylcellulose 1:1 (in total, dry mass equivalent of 0.28 g), a mixture of initiators: 1,1,3,3,-tetramethylbutyl peroxyneodecanoate and di-(2-ethylhexyl) peroxydicarbonate (1:2), with the total value of 0.1% (weight/VC) and a nanofiller. The air was removed from the reactor and 410 g of vinyl chloride was added. The reaction mixture was heated and the required polymerization temperature was maintained. After 4 hours, the reaction was stopped and properties of the polymer obtained were studied in the processing, on blends prepared based on the following description,
The nanofiller was added either once, at the beginning of polymerization (method I), in two (method II) or three portions (method III) (the first portion during reactor loading, together with other polymerization mixture components, the second portion after 1 hour, the third portion after 2 hours after reaching polymerization temperature) or continuously (method IV), with the speed allowing for total nanofiller to be added during the first 3 hours of polymerization.

Plasticized (table 1) and rigid (table 2) processing blends were prepared using the obtained PVC powders.

The plasticized blends contained: PVC - 100 weight parts, plasticizer di-isononyl phthalate DINP - 40 weight parts, liquid tinorganic stabilizer (MARK MOK 17, Akros) - 4 weight parts. A laboratory device called Brabender plastographometer, type Plasti-Corder 2200-3, was used for plastographometric studies, the mixer chamber had a capacity of 50 cm³, the batch was 54 g. The chamber temperature was 150 °C, rotors rotation was 20 min⁻¹. Gelated plastificates taken off the chamber were rolled into patches (without cooling) and pressed into 1.5 mm thick plates used to cut moulds to examine tensile properties.

Non-plasticized (rigid) blends contained : PVC - 100 weight parts, tinorganic stabilizer (MARK MOK 17, Akros) - 4 weight parts, Loxiol G60 lubricant - 1 weight part. The chamber temperature was 175 °C, rotors rotation was 30 min⁻¹. Gelated plastificates taken off the chamber were rolled into patches (without cooling) and pressed into 3 mm thick plates used to cut moulds to examine impact strength.

**Table 1. Properties of plasticized PVC blends without and with a nanofiller.**

| Polymeriza-tion temp. [°C] | Nanofiller | Filler form | Filler concentra-tion [%] | Filler addition method | Tensile strength | | Relative elongation at break | |
|---|---|---|---|---|---|---|---|---|
| | | | | | [MPa] | %of increase | [%] | %of increase |
| 50 | - | - | - | - | 19.3 | - | 175.7 | - |
| 57 | - | - | - | - | 18.0 | - | 174.7 | - |
| 65 | - | - | - | - | 15.6 | - | 158.5 | - |
| 50 | SiO₂ | Sol | 0,001 | I | 19.8 | 2.6 | 180.2 | 2.6 |
| | | | 2 | II | 24.1 | 24.9 | 228.3 | 29.9 |
| | | | 10 | III | 22.3 | 15.5 | 207.8 | 18.3 |
| 57 | SiO₂ | Sol | 0,1 | I | 22.8 | 26.7 | 189.0 | 8.2 |
| | | | 3 | I | 23.6 | 31.1 | 218.2 | 24.9 |
| | | | 10 | IV | 22.1 | 22.8 | 206.1 | 18.0 |
| 57 | SiO₂ | Powder | 0,001 | I | 18.9 | 5.0 | 181.0 | 3.6 |
| | | | 3 | III | 23.4 | 30.0 | 216.7 | 24.0 |
| | | | 10 | II | 22.1 | 22.8 | 205.9 | 17.9 |
| 65 | SiO₂ | Dispersion | 0.01 | II | 17.1 | 9.6 | 170.0 | 7.3 |
| | | | 3 | IV | 22.1 | 41.7 | 205.3 | 29.5 |
| | | | 9 | III | 18.6 | 19.2 | 176.2 | 11.2 |
| 50 | Si/MA | Dispersion | 0,005 | II | 20.5 | 6.2 | 182.0 | 3.6 |
| | | | 2 | I | 24.3 | 25.9 | 233.7 | 33.0 |
| | | | 4 | IV | 23.9 | 23.8 | 213.2 | 21.3 |
| 65 | | Powder | 1 | I | 20.9 | 34.0 | 188.1 | 18.7 |
| | | | 5 | III | 21.0 | 34.6 | 190.2 | 20.0 |
| 50 | Si/MMA | Dispersion | 0,005 | I | 17.6 | 12.8 | 173.5 | 9.5 |
| | | | 4 | IV | 21.8 | 39.7 | 209.6 | 32.2 |
| | | | 5 | III | 19.9 | 27.6 | 181.2 | 14.3 |
| 65 | | Powder | 1 | I | 25.0 | 38.9 | 222.0 | 27.1 |
| | | | 3 | III | 24.1 | 33.9 | 208.8 | 19.5 |

| | | | | | | | | |
|---|---|---|---|---|---|---|---|---|
| Si/MA - "core/shell" nanofiller, silicone rubber/poly(methyl acrylate) Si/MMA - "core/shell" nanofiller, silicone rubber/poly(methyl methacrylate) | | | | | | | | |

**Table 2. Properties of non-plasticized (rigid) PVC blends without and with a nanofiller (polymerization temperature of 57 °C)**

| Nanofiller | Filler form | Filler concentra-tion [%] | Filler addition method | Notched impact strength [kJ/m²] | %of impact strength increase | Shore hardness [D] |
|---|---|---|---|---|---|---|
| - | - | - | - | 6.8 | | 89 |
| SiO₂ | Sol | 0.1 | I | 7.1 | 4.4 | 88 |
| SiO₂ | Dispersion | 1 | II | 9.6 | 41.0 | 89 |
| SiO₂ | Powder | 3 | III | 11.1 | 63.2 | 88 |
| Si/MMA 40/60 | Dispersion | 0.5 | I | 8.0 | 17.6 | 88 |
| Si/MMA 40/60 | Powder | 1 | IV | 10.1 | 48.5 | 89 |
| Si/MMA 80/20 | Dispersion | 5 | II | 8.6 | 26.5 | 89 |
| Si/MA 60/40 | Dispersion | 1 | IV | 9.4 | 38.2 | 88 |
| Si/MA 20/80 | Dispersion | 3 | II | 10.9 | 60.3 | 88 |
| Si/MA | Powder | 5 | I | 9.8 | 44.1 | 88 |
| 80/20 | | | | | | |

| | | | | | | |
|---|---|---|---|---|---|---|
| Si/MA - see table 1 Si/MMA - see table 1 | | | | | | |

According to the invention, addition of nanofillers in the polymerization of vinyl chloride, in temperature range typical for suspension polymerization, i.e. 50-70°C, will cause, depending on the nanofiller type and amount (vs. PVC without a nanofiller):
- for plasticized products - increase in PVC tensile strength up to 40% and increase in relative elongation at break up to 30%,
- for rigid products - increase in impact strength up to 60%.

The best product mechanical properties and significant reduction in their flammability was achieved for specifically produced nanofillers. Table 3 and 4 present properties of products produced under favorable invention conditions. To produce modified PVC, the following were used:
- silica produced by the sol-gel method from a reaction mixture containing tetraalkoxysilane with alkoxy group from C₁ to C₄ alcohol or mixture of aliphatic alcohols from C₁ to C₄, in the molar ratio from 1:5 to 1:35 respectively - using the PL 198188 patent method.
- silicone-acrylate "core/shell" filler, wherein silicone rubber is the core and poly(methyl methacrylate) is the shell - using the Polish Patent PL 210583 (Polish Patent Application P-379411). The above nanofillers significantly improved PVC mechanical properties:
   - tensile strength for plasticized PVC nanocomposite samples increased by a maximum of 47.7% using Si/MMA and by 34.7% for samples containing SiO₂,
   - impact strength of PVC nanocomposite vs. PVC increased by a maximum of 76.4% using Si/MMA and by 69.1% for samples containing SiO₂.

Table 5 presents results of PVC nanocomposite flammability tests. For PVC nanocomposites with nanosilica and for PVC nanocomposites containing core/shell nanofiller, the oxide index increase was max. 17% and 18.7% respectively (plasticized blends) and 85.6% and 79.7% (rigid blends), indicating a significant fire resistance improvement.

**Table 3. Properties of plasticized PVC blends without and with a nanofiller (polymerization temperature of 50 °C)**

| Nanofiller | Filler form | Filler concentra-tion [%] | Filler addition method | Tensile strength | | Relative elongation at break | |
|---|---|---|---|---|---|---|---|
| | | | | [MPa] | %of increase | [%] | %of increase |
| - | - | - | - | 19.3 | - | 175.7 | - |
| SiO₂^{*} | Sol | 0.1 | I | 21.4 | 10.9 | 175.0 | -0.7 |
| SiO₂^{*} | Powder | 1.0 | II | 26.0 | 34.7 | 161.2 | -8.2 |
| Si/MMA* 80/20 | Powder | 0.1 | II | 20.5 | 6.2 | 170.2 | -3.1 |
| Si/MMA* 40/60 | Dispersion | 2 | I | 28.5 | 47.7 | 160.0 | -8.9 |
| Si/MMA* 60/40 | Dispersion | 5 | IV | 27.2 | 40.9 | 163.4 | -7.0 |

| | | | | | | | |
|---|---|---|---|---|---|---|---|
| SiO₂^{*} - nanosilica obtained using the PL 198188 patent method Si/MMA^{*} - spherical "core/shell" nanofiller - silicone rubber/poly(methyl methacrylate) obtained using the Polish patent PL 210583 method (Polish Patent Application P 379411). | | | | | | | |

**Table 4. Properties of non-plasticized (rigid) PVC blends without and with a nanofiller (polymerization temperature of 57 °C)**

| Nanofiller | Filler form | Filler concentra-tion [%] | Filler addition method | Notched impact strength [kJ/m²] | % of impact strength increase | Shore hardness [D] |
|---|---|---|---|---|---|---|
| - | - | - | - | 6.8 | | 89 |
| SiO₂^{*} | sol | 0.1 | I | 8.0 | 17.6 | 89 |
| SiO₂^{*} | sol | 1.0 | I | 11.5 | 69.1 | 88 |
| SiO₂^{*} | sol | 3.0 | III | 10.4 | 52.9 | 88 |
| Si/MMA* 40/60 | Powder | 0.1 | I | 9.4 | 38.2 | 89 |
| Si/MMA* 45/55 | Dispersion | 1.5 | II | 12.0 | 76.4 | 89 |

| | | | | | | |
|---|---|---|---|---|---|---|
| SiO₂^{*} - see table 3 Si/MMA^{*} - see table 3 | | | | | | |

**Table 5. Oxygen index of PVC nanocomposites (plasticized and rigid), OI according to ISO 4589 Standard**

| PVC blend type | Nanofiller | Filler concentration | OI% |
|---|---|---|---|
| Plasticized | - | - | 23.5 |
| | SiO₂^{*} | 0.1 | 24.5 |
| | SiO₂^{*} | 1.0 | 26.7 |
| | SiO₂^{*} | 3.0 | 27.5 |
| | Si/MMA* 80/20 | 0.1 | 23.7 |
| | Si/MMA* 40/60 | 2 | 27.3 |
| | Si/MMA* 60/40 | 3 | 27.9 |
| Rigid | - | - | 25.7 |
| | SiO₂^{*} | 0.1 | 32.0 |
| | SiO₂^{*} | 1.0 | 47.7 |
| | SiO₂^{*} | 3.0 | 46.5 |
| | Si/MMA* 40/60 | 0.5 | 42.3 |
| | Si/MMA* 20/80 | 1.5 | 45.7 |
| | Si/MMA* 60/40 | 3.0 | 46.2 |

| | | | |
|---|---|---|---|
| SiO₂^{*} - see table 3 Si/MMA^{*} - see table 3 | | | |

## Claims

1. Method for the suspension polymerization of vinyl chloride, at a temperature of 50-70°C, using suspension stabilizers and free radical initiators and a nanometer-size filler, **characterized in that** the polymerization is performed in a mixture containing a nanofiller in the form of nanosperes with an average size of primary particle of up to 200 nm, with the nanofiller being a hybrid "core/shell" silicone-acrylate filler, wherein silicone rubber is the core and poly(methyl acrylate) or poly(methyl methacrylate) is the shell, with 0.001 - 5 % weight ratio to vinyl chloride, with nanofiller used in the form of a sol, gel, powder or in the form of aqueous dispersion of powder, added once, in portions or continuously.

2. Method according to claim 1, **characterized in that** the nanofiller, wherein silicone rubber is the core and poly(methyl acrylate) or poly(methyl methacrylate) is the shell, in the proportion from 20:80 to 80:20, ideally 40:60 to 60:40.

3. Method according to claim 1 or 2, **characterized in that** 0.01 - 3 % of the nanofiller is used, ideally in the 0.1 -2 % weight ratio to vinyl chloride.

4. Method according to claim 1, **characterized in that** the aqueous dispersion of a nanofiller in the powder form is stabilized with a suspension stabilizer.

5. Method according to claim 4, **characterized in that** the aqueous dispersion of a nanofiller is stabilized with a suspension stabilizer from methylcellulose derivatives and/or poly(vinyl alcohol)s.

## Patentansprüche

1. Verfahren zur Suspensionspolymerisation von Vinylchlorid bei einer Temperatur von 50-70°C unter Verwendung von Suspensionsstabilisatoren und Radikal-Initiatoren und einem Füllstoff in Nanometergröße, **dadurch gekennzeichnet, dass** die Polymerisation in einem Gemisch, das einen Nanofüllstoff in der Form von Nanokügelchen mit einer mittleren primären Teilchengröße von bis zu 200 nm enthält, durchgeführt wird, wobei der Nanofüllstoff ein "Kern/Schale"-Silikon-Acrylat-Hybridfüllstoff mit einem Gewichtsverhältnis von 0,001 - 5 % zu Vinylchlorid ist, wobei Silikonkautschuk der Kern ist und Poly(methylacrylat) oder Poly(methylmethacrylat) die Schale ist, wobei der Nanofüllstoff in der Form eines Sols, Gels, Pulvers oder in der Form einer wässrigen Dispersion von Pulver, zugegeben in einer Menge, in Portionen oder kontinuierlich, verwendet wird.

2. Verfahren gemäß Anspruch 1, **dadurch gekennzeichnet, dass** der Nanofüllstoff, wobei Silikonkautschuk der Kern ist und Poly(methylacrylat) oder Poly(methylmethacrylat) die Schale ist, im Anteil von 20:80 bis 80:20, idealerweise 40:60 bis 60:40, verwendet wird.

3. Verfahren gemäß Anspruch 1 oder 2, **dadurch gekennzeichnet, dass** 0,01 - 3 % des Nanofüllstoffes, idealerweise im Gewichtsverhältnis von 0,1 - 2 % zu Vinylchlorid, verwendet werden.

4. Verfahren gemäß Anspruch 1, **dadurch gekennzeichnet, dass** die wässrige Dispersion eines Nanofüllstoffes in der Pulverform mit einem Suspensionsstabilisator stabilisiert wird.

5. Verfahren gemäß Anspruch 4, **dadurch gekennzeichnet, dass** die wässrige Dispersion eines Nanofüllstoffes mit einem Suspensionsstabilisator von Methylcellulosederivaten und/oder Poly(vinylalkohol)en stabilisiert wird.

## Revendications

1. Procédé de polymérisation en suspension de chlorure de vinyle, à une température de 50 - 70°C, en utilisant des stabilisateurs de suspension et des initiateurs de radicaux libres et une charge de taille nanométrique, **caractérisé en ce que** la polymérisation est réalisée dans un mélange contenant une nanocharge sous la forme de nanosphères d'une taille moyenne de particule primaire allant jusqu'à 200 nm, la nanocharge étant une charge hybride silicone - acrylate de type « noyau/enveloppe », dans laquelle le caoutchouc de silicone est le noyau et le poly(acrylate de méthyle) ou le poly(méthacrylate de méthyle) est l'enveloppe, dans une proportion de 0,001 - 5 % en poids par rapport au chlorure de vinyle, la nanocharge étant utilisée sous la forme d'un sol, d'un gel, d'une poudre ou sous la forme d'une dispersion aqueuse d'une poudre, ajoutée en une fois, par portions ou en continu.

2. Procédé selon la revendication 1, **caractérisé en ce que** la nanocharge, dans laquelle le caoutchouc de silicone est le noyau et le poly(acrylate de méthyle) ou le poly(méthacrylate de méthyle) est l'enveloppe, est en proportion de 20:80 à 80:20, idéalement de 40:60 à 60:40.

3. Procédé selon la revendication 1 ou 2, **caractérisé en ce que** 0,01 - 3 % de la nanocharge est utilisé, idéalement en proportion de 0,1 - 2 % en poids par rapport au chlorure de vinyle.

4. Procédé selon la revendication 1, **caractérisé en ce que** la dispersion aqueuse d'une nanocharge sous forme d'une poudre est stabilisée avec un stabilisateur de suspension.

5. Procédé selon la revendication 4, **caractérisé en ce que** la dispersion aqueuse d'une nanocharge est stabilisée avec un stabilisateur de suspension issu de dérivés de méthylcellulose et/ou de poly(vinylalcool)s.
